# EUROPÄISCHE PATENTSCHRIFT

(11) **EP 0 869 691 B1**
(45) Veröffentlichungstag und Bekanntmachung des Hinweises auf die Patenterteilung: **07.06.2006**
(21) Anmeldenummer: 98102843.4
(22) Anmeldetag: 19.02.1998
(51) Int. Cl.: H04Q 7/32

(54) **Netzsteuerbares GSM-Mobilfunkgerät**
GSM mobile radio apparatus, which can be controlled by the network
Station mobile GSM, contrôlable par le réseau

(30) Priorität: 04.04.1997 DE 19713965
(43) Veröffentlichungstag der Anmeldung: 07.10.1998
(73) Patentinhaber: Deutsche Telekom AG, 53113 Bonn (DE)
(72) Erfinder: Posegga, Joachim, Dr.rer.nat., 76646 Bruchsal (DE)

(56) Entgegenhaltungen:
- EP-A- 0 562 890
- WO-A-93/12604

## Beschreibung

Die Erfindung betrifft ein GSM-Mobilfunkgerät, das über das GSM-Netz bezüglich seiner Funktionalität erweiterbar und steuerbar ist.

GSM-Mobilfunkgeräte bieten einen festen Satz von Funktionen, die es dem GSM-Netz-Teilnehmer ermöglichen, festgelegte Dienste im GSM-Netz zu nutzen, wie etwa die Sprach- oder Datenübertragung, das Versenden von SMS und dergleichen. Diese Dienste sind im GSM-Mobilfunkgerät implementiert. Erweiterungen oder Änderungen dieser Dienste erfordern in der Regel eine Änderung der Software des GSM-Mobilfunkgeräts. Diese Änderungen der Software werden normalerweise vom jeweiligen Hersteller durchgeführt und erfordern, daß der GSM-Netz-Teilnehmer sein Mobilfunkgerät beim Hersteller umprogrammieren läßt, was aufwendig und kostenintensiv ist.

Aus der EP 0 562 890 A1 ist es bekannt, spezielle Programmdaten an das SIM eines Mobilfunkgeräts zu senden. Das SIM führt diese Programmdaten aus, wodurch sich Änderungen in der SIM-Funktionalität bewirken lassen, beispielsweise eine neue Zusatzfunktionalität. Derartige Änderungen sind aber nur in sehr begrenztem Umfang möglich, da das SIM selber nur über begrenzte Fähigkeiten verfügt. Insbesondere kann die Kommunikation mit einer externen Komponente (beispielsweise mit einer Alarmanlage) nicht ermöglicht werden, sofern die Grundlagen einer solchen Funktionalität nicht schon von Anfang an bei der Entwicklung des SIM berücksichtigt wurden. Ferner ist aus der WO 93/12604 ein schnurloses Telefon mit mindestens einem Erweiterungsmodul bekannt. Auf diese Weise kann die Funktionalität des schnurlosen Telefons erweitert werden, beispielsweise um die Funktion eines Taschenrechners. Hierbei sind für spezifische Funktionalitäten aber jeweils spezifische Erweiterungsmodule erforderlich, die zudem auf das schnurlose Telefon abgestimmt sein müssen.

Eine Aufgabe der vorliegenden Erfindung besteht darin, ein GSM-Mobilfunkgerät bzw ein Verfahren bereitzustellen, das eine externe Komponente steuern kann, ohne dass dafür Änderungen in der Software des GSM-Mobilfunkgeräts erforderlich sind.

Gelöst wird diese Aufgabe durch die Merkmale der Ansprüche 1 und 6. Vorteilhafte Weiterbildungen der Erfindung sind in den Unteransprüchen angegeben. Es sei darauf hingewiesen, dass unter den internen Bauelementen des Mobilfunkgeräts, wie sie im Anspruch 2 zitiert werden, beispielsweise Tastatur, Display, Lautsprecher und Mikrofon zu verstehen sind.

Demnach ist das GSM-Mobilfunkgerät erfindungsgemäß mit einem proaktiven SIM-Application Toolkit (SIM-AT) ausgestattet, wobei das SIM-AT mit einem Gateway ausgebildet ist, das an der Antenne des GSM-Mobilfunkgeräts ankommende Daten an eine Schnittstelle des GSM-Mobilzunkgeräts leitet und die Daten dann von dort zu einer externen Komponente gelangen.

Damit erlaubt es die Erfindung insbesondere, die Funktionalität des GSM-Mobilfunkgeräts wesentlich flexibler zu handhaben, wobei ein wesentliches Merkmal der Erfindung darin besteht, daß das GSM-Mobilfunkgerät zur Erweiterung seiner Funktionalität nicht speziell konfiguriert werden muß, sondern daß die zusätzliche Funktionalität über das standardisierte proaktive SIM-AT angestoßen und kontrolliert wird.

Das erfindungsgemäße Prinzip ist unabhängig davon, wie die externe Komponente konkret beschaffen ist. Aktuell stellt ein Allzweck- bzw. General-Purpose-Prozessor die interessanteste Verkörperung einer derartigen Komponente dar. Ein Beispiel für einen derartigen Prozessor stellen die sich in Entwicklung befindlichen Java™-Chips dar. Bei Java™ handelt es sich um eine von Sun Microsystems entwickelte Programmiersprache, die auf dem Prinzip aufbaut, daß kleine, ausführbare Programme, sogenannte Applets in einem Netz zur Verfügung gestellt und bei Bedarf von einem Nutzer aus dem Netz geladen und ausgeführt werden. Dieser ausführbare Maschinencode benötigt eine spezielle Stack-Maschine (Java™ Virtual Machine), um abzulaufen, welche Maschine auf der Benutzerseite vorhanden sein muß. Wenn nun eine derartige Stack-Maschine für Java™-Applets in Form eines Chips in ein GSM-Mobilfunkgerät eingebunden bzw. als externe Komponente an dieses über eine Schnittstelle angeschlossen ist, kann beliebige Software in Form von Java™-Applets aus dem GSM-Netz auf das GSM-Mobilfunkgerät gebracht und ausgeführt werden. Diese Software kann auch die Funktion des GSM-Mobilfunkgeräts vollständig kontrollieren.

Nachfolgend wird die Erfindung anhand der Zeichnung beispielhaft näher erläutert; es zeigen:
Fig. 1 eine schematische Ansicht eines GSM-Mobilfunkgeräts, an das erfindungsgemäß eine externe Komponente angeschlossen ist, und
Fig. 2 den Aufbau der Anordnung von Fig. 1 mehr im einzelnen.

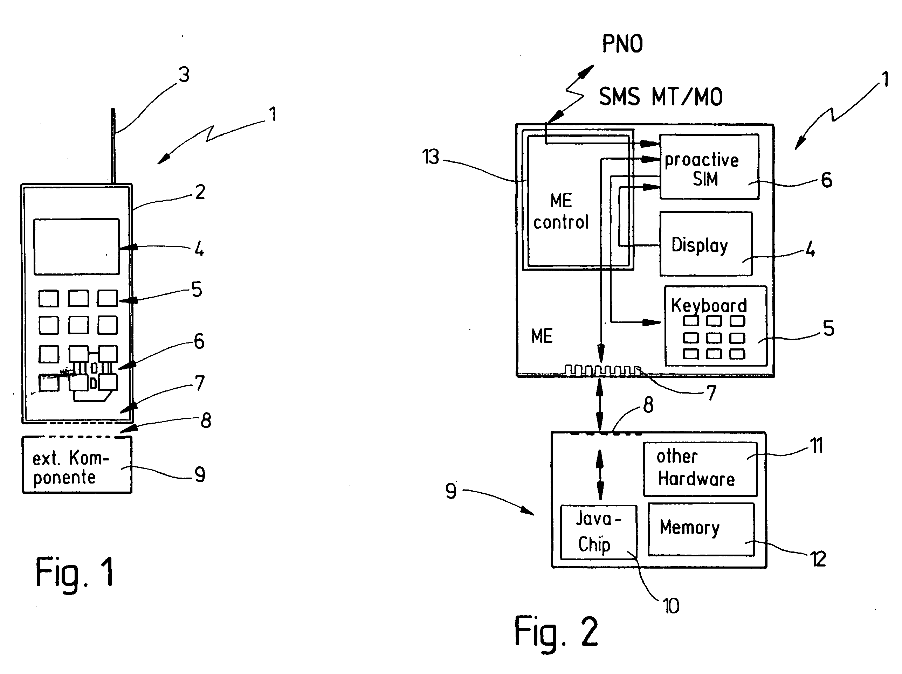

In Fig. 1 ist ein GSM-Mobilfunkgerät allgemein mit 1 bezeichnet. Das Mobilfunkgerät 1 weist ein Gehäuse 2 auf, von dessen oberer Stirnseite eine Antenne 3 vorsteht, und das auf der Vorder- bzw. Bedienseite ein Display bzw. eine Anzeige 4 und eine Tastatur 5 hat. Im Inneren des Gehäuses 1 ist die an sich bekannte Hardware des GSM-Mobilfunkgeräts untergebracht, die unter anderem einen sogenannte SIM 6 aufweist, auf den nachfolgend näher eingegangen wird. Außerdem hat des GSM-Mobilfunkgerät 1 an seiner unteren Stirnseite eine serielle Schnittstelle 7, die mit einer externen Komponente bzw. Schaltung 9 über eine Schnittstelle 8 dieser Komponente 9 kommuniziert.

Hinsichtlich des SIM 6 wird auf folgende Literaturstelle verwiesen: The SIM Application Toolkit, ETSI SMG SG, doc (95).20, 1995. Diese Druckschrift gibt den aktuellen Stand der Standardisierungsbemühungen für das SIM Application Toolkit (SIM-AT) wieder. Einen Sonderfall des SIM stellt das sogenannte "proaktive SIM" dar, das mit dem GSM-Netz und dem GSM-Mobilfunkgerät interagieren kann. Diesbezüglich wird zusätzlich auf folgende Druckschrift verwiesen: Report of the SMG-SG(SMG9 joint ad hoc on "SIM Toolkit Security". ETSI SG SMG9 doc (95) 973. Die Kommunikation mit dem proaktiven SIM erfolgt über SMS-MT bzw. über Cell Broadcast (CB), also über Textnachrichten, die beliebigen Inhalts sein können und auch Programme zur Ausführung auf der SIM-AT enthalten können. Mit derartigen Programmen ist es möglich, die internen "Devices" des GSM-Mobilfunkgeräts anzusprechen, demnach beispielsweise das Display 4 gesteuert oder eine Eingabe über die Tastatur 5 ausgewertet werden kann. Ein "Device" in diesem Sinne stellt auch die Schnittstelle 7 dar.

Insbesondere hat das SIM-AT folgende für die Anbindung von externen Komponenten relevanten Merkmale:
1. Die Kommunikation GSM-Netz → SIM kann über SMS-MT, SMS-CB und SMS-PP realisiert werden.
2. Die Kommunikation SIM → GSM-Netz ist über SMS-MO, USSD und Voice/Data call möglich.
3. Die Kommunikation SIM ↔ GSM-Mobilfunkgerät kann auf folgende Kanäle zugreifen: Anzeige im Display 4, Abfrage der Tastatur 5 und akustische Ausgabe auf einem (nicht gezeigten) Hörer. Außerdem stellt die serielle Schnittstelle 7 ebenfalls einen derartigen Kanal dar.

Mit Hilfe von 1. und 2. kann technisch eine Übertragung von Daten, also auch von ausführbaren Programmen in das SIM-AT realisiert werden, da beispielsweise über SMS beliebige Daten gesendet werden können. Diese Daten können entweder passiv von der SIM empfangen oder auch aktiv aus dem Netz angefordert werden.

Für das Weiterreichen an die über die serielle Schnittstelle 8 des GSM-Mobilfunkgeräts 1 angeschlossene externe Komponente 9 ist es erforderlich, daß das SIM-AT 6 direkt oder indirekt mit der seriellen Schnittstelle 8 des GSM-Mobilfunkgeräts 1 kommunizieren kann. Eine derartige Funktion ist zur Zeit im SIM-AT nicht direkt vorgesehen; prinzipiell steht der Definition eines entsprechenden geräteinternen Devices nichts entgegen. Erforderlich ist lediglich, daß das proaktive SIM-AT vom Netz aus derart programmiert wird, daß ein Weiterreichen von Daten durchgeführt werden kann.

Um schließlich eine direkte Kommunikation der externen Komponente 9 im GSM-Netz zu erreichen, ist erfindungsgemäß vorgesehen, das SIM-AT 6 so zu programmieren, daß ankommende Daten aus dem GSM-Netz direkt auf die serielle Schnittstelle 7 des GSM-Mobilfunkgeräts 1 weitergegeben werden, wobei das SIM-AT die Funktion eines Gateways übernimmt. Weiterhin kann ein entsprechend programmiertes SIM-AT auch als Gateway zur Tastatur 5, zum Display 4, zum (nicht dargestellten) Lautsprecher und zum (nicht dargestellten) Mikrophon fungieren, so daß die komplette Steuerung des GSM-Mobilfunkgeräts an die angeschlossene externe Komponente 9 übergeht.

Fig. 2 zeigt die erfindungsgemäße Anordnung von Fig. 1 mehr im einzelnen unter Implementierung der externen Komponente 9 in Gestalt einer Java™-Hardware 10, die neben weiterer Hardware 11 und einem Speicher 12 die externe Komponente 9 bildet. Im GSM-Mobilfunkgerät 1 enthalten ist in Fig. 2 außerdem eine Steuerung 13 für dieses dargestellt. Der jeweilige Signalfluß in der Anordnung von Fig. 2 ist mit Pfeilen bezeichnet.

Wie bereits erläutert, spielt das SIM-AT 6 die Rolle eines Gateways im vorliegenden Fall zwischen der Java™-Hardware 10 auf der einen Seite und dem GSM-Netz bzw. dem GSM-Mobilfunkgerät 1 auf der anderen Seite. Mit der in Fig. 2 gezeigten Konfiguration lassen sich beispielsweise Java™-Applets auf den Java™-Chip 10 übertragen, die dazu ausgelegt sind, wenn sie ablaufen, gegebenenfalls die komplette Funktion des GSM-Mobilfunkgeräts 1 über den Umweg SIM-AT 6 zu steuern.

Ein wesentlicher Vorteil der erfindungsgemäßen Kombination aus GSM-Mobilfunkgerät 1 und externer Komponente bzw. Schaltung 9, die gegebenenfalls auch im Gerät 1 integriert sein kann, ist, daß das GSM-Mobilfunkgerät selbst nicht verändert oder umkonfiguriert werden muß, um seine Funktionalität zu ändern, da eine geänderte Funktion aus dem GSM-Netz durch den Transport von Applets über den Umweg SIM-AT 6 erfolgen kann, die die in gegebenenfalls mehreren SMS eingepackten Applets an den Java™-Chip 10 schickt.

Grundsätzlich kann der Java™-Chip 10, ebenfalls auf dem Umweg über das SIM-AT, Befehle an das GSM-Mobilfunkgerät 1 weitergeben und beliebig im GSM-Netz kommunizieren. Entsprechende Schnittstellen können auf Seite des Java™-Chips 10 bzw. der externen Komponente 9 relativ problemlos über eine geeignete Klassenbibliothek realisiert werden.

## Patentansprüche

1. GSM-Mobilfunkgerät (1) mit einer Antenne (3), einem proaktiven SIM-Application Toolkit (6) und mindestens einer der Kommunikation mit einer externen Komponente (9) dienenden Schnittstelle (7), wobei aus dem GSM-Netz bei der Antenne (3) Daten ankommen, **dadurch gekennzeichnet, daß** das SIM-Application Toolkit (6) mit einem die Daten an die Schnittstelle (7) weitergebenden Gateway ausgebildet ist und die Daten über die Schnittstelle (7) zu der externen Komponente (9) geleitet werden.

2. GSM-Mobitfunkgerät (1) nach Anspruch 1, **dadurch gekennzeichnet, daß** das SIM-Application Toolkit (6) als Gateway zwischen der externen Komponente (9) und internen Bauelementen des GSM-Mobilfunkgeräts (1) ausgelegt ist.

3. GSM-Mobilfunkgerät (1) nach einem der vorhergehenden Ansprüche, **dadurch gekennzeichnet, daß** die externe Komponente (9) einen Allzweck-Prozessor (10) enthält, der über das GSM-Netz frei programmiert wird.

4. GSM-Mobilfunkgerät (1) nach Anspruch 3, **dadurch gekennzeichnet, daß** der Prozessor (10) dazu ausgelegt ist, ausführbare Programme aus dem GSM-Netz zu verarbeiten bzw. auszuführen,

5. GSM-Mobilfunkgerät (1) nach einem der vorhergehenden Ansprüche, **dadurch gekennzeichnet, daß** die Schnittstelle (7) eine serielle Schnittstelle ist.

6. Verfahren zur Übermittlung von Daten aus dem GSM-Netz mittels eines GSM-Mobilfunkgeräts (1) an eine externe Komponente (9), bei dem aus dem GSM-Netz bei einer Antenne (3) des GSM-Mobilfunkgeräts (1) ankommende Daten an ein SIM-Application Toolkit (6) des GSM-Mobilfunkgeräts (1) geleitet werden, **dadurch gekennzeichnet, daß** die ankommenden Daten mit einem Gateway des SIM-Application Toolkits (6) an eine der Kommunikation mit der externen Komponente (9) dienende Schnittstelle (7) weitergegeben werden und über die Schnittstelle (7) zu der externen Komponente (9) geleitet werden.

## Claims

1. GSM mobile radio device (1) with an antenna (3), with a proactive SIM application toolkit (6), and with at least one interface (7) having the purpose of communication with an external component (9), wherein data arrive at the antenna (3) from the GSM network, **characterized in that** the SIM application toolkit (6) is designed with a gateway for forwarding the data to the interface (7), and the data are routed through the interface (7) to the external component (9).

2. GSM mobile radio device (1) according to claim 1, **characterized in that** the SIM application toolkit (6) is designed as a gateway between the external component (9) and internal components of the GSM mobile radio device (1).

3. GSM mobile radio device (1) according to any one of the preceding claims, **characterized in that** the external component (9) contains an all-purpose processor (10) that is field programmed over the GSM network.

4. GSM mobile radio device (1) according to claim 3, **characterized in that** the processor (10) is designed to process or execute executable programs from the GSM network.

5. GSM mobile radio device (1) according to any one of the preceding claims, **characterized in that** the interface (7) is a serial interface.

6. Method for transmitting data from the GSM network to an external component (9) by means of a GSM mobile radio device (1), wherein data arriving at an antenna (3) of the GSM mobile radio device (1) from the GSM network are routed to a SIM application toolkit (6) of the GSM mobile radio device (1), **characterized in that** the arriving data are forwarded by a gateway of the SIM application toolkit (6) to an interface (7) having the purpose of communication with the external component (9) and are routed through the interface (7) to the external component (9).

## Revendications

1. Appareil de radiocommunication mobile GSM (1) composé d'une antenne (3), d'un SIM Application Toolkit (6) proactif et d'au moins une interface (7) servant à la communication avec un composant externe (9), des données arrivant sur l'antenne (3) en provenance du réseau GSM, **caractérisé en ce que** le SIM Application Toolkit (6) est muni d'une passerelle transmettant les données à l'interface (7) et **en ce que** les données sont acheminées vers le composant externe (9) par l'intermédiaire de l'interface (7).

2. Appareil de radiocommunication mobile GSM (1) selon la revendication 1, **caractérisé en ce que** le SIM Application Toolkit (6) est conçu sous la forme d'une passerelle entre le composant externe (9) et des composants internes de l'appareil de radiocommunication mobile GSM (1).

3. Appareil de radiocommunication mobile GSM (1) selon l'une des revendications précédentes, **caractérisé en ce que** le composant externe (9) comprend un processeur universel (10) librement programmé par l'intermédiaire du réseau GSM.

4. Appareil de radiocommunication mobile GSM (1) selon la revendication 3, **caractérisé en ce que** le processeur (10) est conçu pour traiter ou exécuter des programmes exécutables provenant du réseau GSM.

5. Appareil de radiocommunication mobile GSM (1) selon l'une des revendications précédentes, **caractérisé en ce que** l'interface (7) est une interface série.

6. Procédé de transmission de données provenant du réseau GSM à un composant externe (9) au moyen d'un appareil de radiocommunication mobile GSM (1), dans lequel des données arrivant sur une antenne (3) de l'appareil de radiocommunication mobile GSM (1) en provenance du réseau GSM sont acheminées vers un SIM Application Toolkit (6) de l'appareil de radiocommunication mobile GSM (1), **caractérisé en ce que** les données arrivant sont transmises, à l'aide d'une passerelle du SIM Application Toolkit (6), à une interface (7) servant à la communication avec le composant externe (9), et acheminées vers le composant externe (9) par l'intermédiaire de l'interface (7).
